# EUROPÄISCHE PATENTSCHRIFT

(11) **EP 0 866 251 B1**
(45) Veröffentlichungstag und Bekanntmachung des Hinweises auf die Patenterteilung: **30.10.2002**
(21) Anmeldenummer: 98103062.0
(22) Anmeldetag: 21.02.1998
(51) Int. Cl.: F16K 5/06

(54) **Kugelhahn aus Kunststoff**
Plastic ball valve
Robinet à tournant sphérique de matière plastique

(30) Priorität: 20.03.1997 DE 19711740
(43) Veröffentlichungstag der Anmeldung: 23.09.1998
(73) Patentinhaber: ASV Stübbe GmbH & Co. KG, D-32602 Vlotho (DE)
(72) Erfinder: Kohlstädt, Egon, 32602 Vlotho (DE); Pape, Fritz-Günther, 32457 Porta Westfalice-OT. Eisbergen (DE)
(74) Vertreter: Hosbach, Hans Ulrich, Dipl.-Ing.

(56) Entgegenhaltungen:
- EP-A- 0 623 770
- CH-A- 430 360
- FR-A- 2 651 295
- US-A- 3 009 680
- US-A- 4 099 705
- US-A- 5 067 691

## Beschreibung

Die Erfindung betrifft einen Kugelhahn aus Kunststoff mit
- einem Gehäuse, das einen Einlaß und einen Auslaß aufweist,
- einer Ventilkugel, die unter Zwischenschaltung von zwei Dichtringen verdrehbar im Gehäuse angeordnet ist,
- zwei Spitzenden, die sich an den Einlaß und an den Auslaß des Gehäuses anschließen, und
- mindestens einem Käfig, der einen der Dichtringe aufnimmt und von einem der Spitzenden in Richtung auf die Ventilkugel verspannt ist.

Ein derartiger Kugelhahn ist z.B. aus US-A-4099705 bekannt.

Bei derartigen Kugelhähnen werden die Spitzenden, die zum Anschweißen der Armatur an die Anschlußleitungen dienen, von Überwurfmuttern mit dem Gehäuse verbunden. Aus der Praxis bekannt ist eine Konstruktion, bei der das Gehäuse den Sitz für einen der Dichtringe bildet, so daß lediglich in der anderen Hälfte des Ventils ein Käfig für den dortigen Dichtring vorgesehen werden muß. Der Käfig bedarf seinerseits zusätzlicher Dichtungen, und zwar sowohl gegenüber dem Gehäuse als auch gegenüber dem zugehörigen Spitzende. Die bekannte Konstruktion weist also eine Vielzahl von Bauteilen auf, die bei der Montage miteinander verbunden werden müssen und darüber hinaus die Lagerhaltung erschweren. Außerdem ist durch die Zahl der Dichtungen und lösbaren Verbindungen ein gewisses Maß an Störanfälligkeit gegeben.

Der Erfindung liegt die Aufgabe zugrunde, einen Kugelhahn der eingangs genannten Art zu schaffen, der bei hoher Zuverlässigkeit einfach im Aufbau und in der Herstellung ist.

Zur Lösung dieser Aufgabe ist der eingangs genannte Kugelhahn erfindungsgemäß dadurch gekennzeichnet, daß das Gehäuse und der Käfig außenseitig planparallele Stirnflächen aufweisen, mit denen das zugehörige Spitzende durch Vibrationsschweißung ganzflächig verschweißt ist.

Bisher war man nicht in der Lage, die aus Kunststoff bestehenden Spitzenden an das Kunststoffgehäuse anzuschweißen, da aufgrund der hohen Wärmebelastung mit Verformungen und Verzug zu rechnen war. Besonders im Bereich des Käfigs hätte eine Erweichung des Kunststoffs äußerst negative Folgen gehabt. Da der Dichtring unter Vorspannung an der Ventilkugel anliegt, hätte er den Käfig verschieben und dadurch die Vorspannung, d.h. die Dichtwirkung vermindern oder gar aufheben können.

Die erfindungsgemäß angewendete Vibrationsschweißung beschränkt die Wärmeerzeugung einzig und allein auf die Berührungsflächen. Nur hier tritt die erforderliche Erweichung auf, und zwar praktisch ohne Eindringtiefe. Verformungen, Verschiebungen oder Verzug können also nicht auftreten.

Dabei läßt sich das Verfahren äußerst schnell durchführen und ergibt eine Festigkeit mit einem Abminderungsfaktor von 0,9. Dies bedeutet, daß die Festigkeit des Originalmaterials fast erreicht wird. Dies ist darauf zurückzuführen, daß die Verbindung ganzflächig entsteht. Trotz erheblicher Wandstärken sind keine beim Schweißen sonst üblichen Vorbereitungsschritte erforderlich.

Das Spitzende verbindet sich sowohl mit dem Gehäuse als auch mit dem Käfig, ohne daß es zu einer Lageänderung des Käfigs kommt. Die gewünschte Vorspannung des Dichtrings bleibt also erhalten. Gleichzeitig wird der Käfig in der vorgegebenen Position unveränderbar fixiert. Seine ganzflächige Verbindung mit dem Spitzende macht den Einsatz zusätzlicher Dichtungen gegenüber dem Spitzende und dem Gehäuse überflüssig. Dadurch vermindert sich die Zahl der Einzeiteile und der möglichen Fehlerquellen. Insgesamt ergibt sich ein extrem geringer Herstellungs- und Montageaufwand.

Verschweißt werden können sämtliche Kunststoffe, und zum Teil auch unterschiedliche Kunststoffe miteinander.

Vorzugsweise liegt der Käfig innenseitig an einer Gehäuseschulter an, so daß er sehr einfach zu positionieren ist. Vor allen Dingen werden hier die erheblichen Kräfte aufgenommen, mit denen beim Vibrationsschweißen gearbeitet werden muß.

In wesentlicher Weiterbildung der Erfindung wird vorgeschlagen, daß in die Durchgangsöffnung des Käfigs ein den Dichtring stützender Klemmring eingesteckt und durch das Spitzende gesichert ist. Der Käfig läßt sich also einfach konfigurieren, wobei der Dichtring von dem Klemmring sicher gehalten und letzterer durch das fest mit dem Käfig verbundene Spitzende an einer Positionsänderung gehindert wird.

Eine besonders einfache Ausbildung ergibt sich dadurch, daß der Dichtring im Querschnitt winkelförmig ausgebildet ist, wobei einer seiner Schenkel stirnseitig an der Ventilkugel und radial innenseitig am Klemmring anliegt. Dadurch wird in konstruktiv günstiger Weise eine einfache, zuverlässige und standfeste Abdichtung geschaffen.

Ganz besonders vorteilhafte Verhältnisse ergeben sich dadurch, daß auch die dem anderen Spitzende zugeordnete Kugelhahnhälfte die vorstehend diskutierten Merkmale aufweist. Die erzielten Vorteile wirken sich also an beiden Ventilhälften aus.

Die Erfindung wird im folgenden anhand eines bevorzugten Ausführungsbeispiels in Zusammenhang mit der beiliegenden Zeichnung näher erläutert. Die Zeichnung zeigt in:

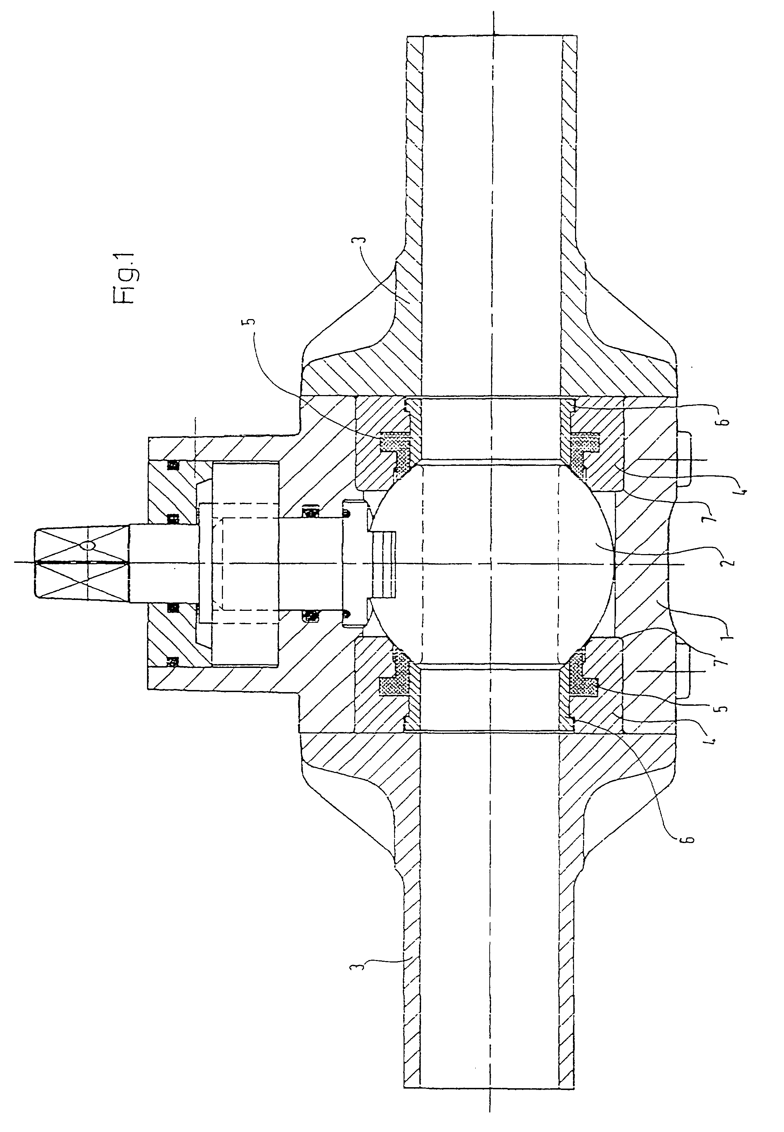

Fig. 1 einen Axialschnitt durch einen Kugelhahn.

Der dargestellte Kugelhahn weist ein Gehäuse 1 auf, in dem eine Ventilkugel 2 drehbar angeordnet ist. Einlaß- und auslaßseitig ist das Gehäuse mit Spitzenden 3 versehen, die dazu dienen, die Armatur mit den Anschlußleitungen zu verschweißen.

Das Gehäuse enthält ferner zwei Käfige 4, in denen jeweils ein Dichtring 5 angeordnet ist. Die Dichtringe 5 sind im Querschnitt winkelförmig ausgebildet, wobei ihr axialer Schenkel stirnseitig an der Ventilkugel 2 anliegt und radial innenseitig von einem Klemmring 6 gestützt wird. Die Klemmringe 6 sind von außen in die Käfige 4 eingesteckt und werden in ihrer Lage von den Spitzenden 3 gesichert. Zur Positionierung und Abstützung der Käfige 4 dienen Gehäuseschultern 7.

Nachdem die Käfige 4 mit ihren Dichtringen 5 und Klemmringen 6 in das Gehäuse 1 eingebracht worden sind, werden die Spitzenden 3 sowohl mit dem Gehäuse 1 als auch mit dem jeweils zugeordneten Käfig 4 verbunden, und zwar durch Vibrationsschweißung. Die Verbindung entsteht also ganzflächig ohne Maß- oder Formänderungen. Insbesondere bleibt die Spannung der Dichtringe 5 erhalten, da es zu keiner Lageänderung der Käfige 4 aufgrund unzulässiger Erweichung des Kunststoffs kommt. Die direkte Verbindung zwischen den Spitzenden 3 und den zugehörigen Käfigen 4 läßt zusätzliche Dichtungen zwischen den Käfigen, dem Gehäuse und den Spitzenden überflüssig werden.

Der Kugelhahn weist eine geringe Anzahl von Einzelteilen auf, die sich einfach herstellen und zusammenfügen lassen. Die Vibrationsschweißung benötigt lediglich 10 % des Zeitaufwandes, den man bei einer Warmschweißung veranlagen müßte. Dabei ergibt sich durch die Vibrationsschweißung eine Verbindung, die 90 % der Originalmaterialfestigkeit entspricht.

Im Rahmen der Erfindung sind durchaus Abwandlungen der beschriebenen Konstruktion möglich. So kann mit anders geformten Dichtringen gearbeitet werden. Dadurch entfallen unter Umständen die stützenden Klemmringe. Allerdings hat sich die dargestellte Konstruktion als besonders vorteilhaft erwiesen.

Ferner ist es möglich, eine derartige Konstruktion lediglich auf eine Hälfte des Kugelhahns anzuwenden. In der anderen Hälfte wird der Käfig sodann von einem Gehäuseansatz gebildet, in den der Dichtring eingefügt ist.

## Patentansprüche

1. Kugelhahn aus Kunststoff mit
- einem Gehäuse (1), das einen Einlaß und einen Auslaß aufweist,
- einer Ventilkugel (2), die unter Zwischenschaltung von zwei Dichtringen (5) verdrehbar im Gehäuse (1) angeordnet ist,
- zwei Spitzenden (3), die sich an den Einlaß und an den Auslaß des Gehäuses anschließen, und
- mindestens einem Käfig (4), der einen der Dichtringe (5) aufnimmt und von einem der Spitzenden (3) in Richtung auf die Ventilkugel (2) verspannt ist,
**dadurch gekennzeichnet,**
**daß** das Gehäuse (1) und der Käfig (4) außenseitig planparallele Stirnflächen aufweisen, mit denen das zugehörige Spitzende (3) durch Vibrationsschweißung ganzflächig verschweißt ist.

2. Kugelhahn nach Anspruch 1, **dadurch gekennzeichnet, daß** der Käfig (4) innenseitig an einer Gehäuseschulter (7) anliegt.

3. Kugelhahn nach Anspruch 1 oder 2, **dadurch gekennzeichnet, daß** in die Durchgangsöffnung des Käfigs (4) ein den Dichtring (5) stützender Klemmring (6) eingesteckt und durch das Spitzende (3) gesichert ist.

4. Kugelhahn nach Anspruch 3, **dadurch gekennzeichnet, daß** der Dichtring (5) im Querschnitt winkelförmig ausgebildet ist, wobei einer seiner Schenkel stirnseitig an der Ventilkugel (2) und radial innenseitig am Klemmring (6) anliegt.

5. Kugelhahn nach einem der Ansprüche 1 bis 4, **dadurch gekennzeichnet, daß** auch die dem anderen Spitzende (3) zugeordnete Kugelhahnhälfte die Merkmale eines oder mehrerer der vorhergehenden Ansprüche aufweist.

## Claims

1. Plastic ball valve including a housing (1), which affords an inlet and an outlet, a valve ball (2), which is rotatably disposed in the housing (1) with the interposition of two sealing rings (5), two spigots (3), which adjoin the inlet and the outlet of the housing, and at least one cage (4), which receives one of the sealing rings (5) and is urged by one of the spigots (3) in the direction towards the valve ball (2), **characterised in that** the housing (1) and the cage (4) have external parallel end faces, to which the associated spigot (3) is welded over its entire area by vibration welding.

2. Ball valve as claimed in Claim 1, **characterised in that** the cage internally engages a housing shoulder (7).

3. Ball valve as claimed in Claim 1 or 2, **characterised in that** inserted into the opening passing through the cage (4) and secured by the spigot (3) is a clamping ring (6), which supports the sealing ring (5).

4. Ball valve as claimed in Claim 3, **characterised in that** the sealing ring (5) is of angled cross-section, one of its limbs engaging the valve ball (2) at its end surface and the clamping ring (6) on its radially inner surface.

5. Ball valve as claimed in one of Claims 1 to 4, **characterised in that** the half of the ball valve associated with the other spigot (3) also has the features of one or more of the preceding claims.

## Revendications

1. Robinet à tournant sphérique, en plastique, comportant
- un corps (1) qui présente une entrée et une sortie,
- un tournant sphérique (2) qui est monté tournant dans le corps avec interposition de deux joints annulaires (5),
- deux extrémités en pointe (3) qui se joignent à l'entrée et à la sortie du corps, et
- au moins une cage (4) qui reçoit un des joints annulaires (5) et est serrée en direction du tournant sphérique (2) par une des extrémités en pointe (3),
**caractérisé par le fait**
**que** le corps (1) et la cage (4) présentent du côté extérieur des surfaces frontales planes et parallèles auxquelles l'extrémité en pointe correspondante (3) est soudée sur toute sa surface par soudage par vibrations.

2. Robinet à tournant sphérique selon la revendication 1, **caractérisé par le fait que** la cage (4) s'appuie du côté intérieur sur un épaulement (7) du corps.

3. Robinet à tournant sphérique selon l'une des revendications 1 et 2, **caractérisé par le fait qu'**un anneau de serrage (6) qui soutient le joint annulaire (5) est engagé dans l'ouverture de passage de la cage (4) et arrêté par l'extrémité en pointe (3).

4. Robinet à tournant sphérique selon la revendication 3, **caractérisé par le fait que** le joint annulaire (5) a une section en équerre, une de ses ailes s'appuyant du côté frontal sur le tournant sphérique (2) et du côté intérieur radialement sur l'anneau de serrage (6).

5. Robinet à tournant sphérique selon l'une des revendications 1 à 4, **caractérisé par le fait que** la moitié du robinet sphérique associée à l'autre extrémité en pointe (3) présente elle aussi les caractéristiques d'une ou de plusieurs des revendications précédentes.
